Europäisches Patentamt

European Patent Office

Office européen des brevets

(19)

(11) Veröffentlichungsnummer : **0 014 908**
**B1**

(12) **EUROPÄISCHE PATENTSCHRIFT**

(45) Veröffentlichungstag der Patentschrift :
**16.02.83**

(21) Anmeldenummer : **80100630.5**

(22) Anmeldetag : **07.02.80**

(51) Int. Cl.³ : **C 13 C  3/00**

(54) **Verfahren zur Herstellung von Rübenschnitzeln hohen Trockensubstanzgehaltes.**

(30) Priorität : **20.02.79 DE 2906528**

(43) Veröffentlichungstag der Anmeldung :
**03.09.80 Patentblatt 80/18**

(45) Bekanntmachung des Hinweises auf die Patenterteilung : **16.02.83 Patentblatt 83/07**

(84) Benannte Vertragsstaaten :
**AT BE CH DE FR GB IT NL SE**

(56) Entgegenhaltungen :
**DE A 1 939 943
FR A 358 543
FR A 1 560 515
FR A 2 380 740
US A 2 295 643
US A 2 452 750
CHEMICAL ABSTRACTS, Band 50, Nr. 22. 25.
November 1956, Spalte 17494a, b, Columbus,
Ohio, US, D. BECKER et al. : « The influence of
multivalent cations on the pressing capacity of
beet pulp »**

(73) Patentinhaber : **Süddeutsche Zucker-Aktiengesellschaft
Maximilianstrasse 10
D-6800 Mannheim 1 (DE)**

(72) Erfinder : **Cronewitz, Theodor, Dipl.-Ing.
Landgrafenstrasse 80 F
D-6520 Worms (DE)**
Erfinder : **Schiweck, Hubert, Dr.
John-F.-Kennedy-Strasse 5
D-6520 Worms (DE)**

(74) Vertreter : **Körber, Wolfhart, Dr. et al
Patentanwälte Dipl.Ing. H.Mitscherlich,
Dipl.Ing. K.Gunschmann, Dr.rer.nat. W.Körber,
Dipl.Ing. J.Schmidt-Evers Steinsdorfstrasse 10
D-8000 München 22 (DE)**

EP 0 014 908 B1

# 0 014 908

## Verfahren zur Herstellung von Rübenschnitzeln hohen Trockensubstanzgehaltes

Die Erfindung bezieht sich auf ein Verfahren zur Herstellung von Rübenschnitzeln hohen Trockensubstanzgehaltes, bei dem die bei der Zuckerherstellung anfallenden extrahierten Schnitzel

a) ein erstes Mal mechanisch abgepreßt,

b) mit den Salzen mehrwertiger Kationen, z. B. Kalziumchlorid, Aluminiumsulfat, Eisenchlorid, in wässeriger Lösung versetzt,

c) ein zweites Mal mechanisch abgepreßt und

d) thermisch getrocknet werden.

In der Zuckerindustrie wird rund ein Drittel des gesamten Energiebedarfs, ca. 2 kg Normkohle auf 100 kg Zuckerrüben, für die Trocknung der abgepreßten, extrahierten Schnitzel aufgewendet. Extrahierte Schnitzel sowie Melasse sind Nebenprodukte der Zuckerherstellung und werden einzeln oder als Gemisch als Futtermittel verwertet. Die Melasse kann dabei zu den Schnitzeln vor oder nach der Trocknung zugegeben werden. Die Trocknung der Schnitzel auf einen Wassergehalt von < 12 % ist zur Verbesserung der Lager- und Transportfähigkeit der Schnitzel notwendig.

Extrahierte Schnitzel verlassen üblicherweise die Extraktionsanlage mit einem Trockensubstanzgehalt < 10 %, davon ca. 1 % Zuckergehalt, und werden in Spindelpressen mechanisch auf einen Wassergehalt von ca. 80 % abgepresst. Das dabei anfallende Preßwasser enthält ca. 1 % Zucker sowie ca. 0,3 % andere organische und anorganische Verbindungen und wird in den Extraktionsprozeß zurückgeführt, um die Zuckerausbeute zu erhöhen und belastendes Abwasser zu vermeiden.

Die Effektivität der mechanischen Entwäßerung hängt — unabhängig von der Konstruktion der verwendeten Pressen — von folgenden Faktoren ab :

Vegetationsbedingungen der Rübe, Teilchengröße und Form der Zuckerrübenschnitzel, Betriebsbedingungen während der Extraktion (Temperatur, Verweilzeit, pH-Wert) und den Betriebsbedingungen der Presse.

In großtechnischen Anlagen wird normalerweise bisher auf diese Weise ein Trockensubstanzgehalt der Preßlinge von 18 bis 23 % erreicht. Trockensubstanzgehalte bis zu 26 % sind bei extremen Betriebsbedingungen, z. B. tiefen pH-Werten in der Extraktion und stark verringerter Durchsatzleistung der Pressen, wohl möglich, jedoch wird in diesen Fällen die mechanische Entwässerung unwirtschaftlicher als die thermische Trocknung.

Es ist bekannt, durch Zugabe von Calcium- oder Aluminiumsalzen über das Extraktionswasser zum Extraktionssystem die Abpreßbarkeit der extrahierten Zuckerrübenschnitzel zu verbessern. (D. Becker et al., ZUCKER *14*, 343-345 (1956) und D. Becker, ZUCKER *17*, 394-397 (1958) ; bei dieser Arbeitsweise gelangen aber ca. 90 % der mit den Salzen dem Extraktionssystem zugesetzten Anionen (Chlorid oder Sulfat) in Form ihrer Alkalisalze in den Rohsaft, durchwandern die Saftreinigung und erhöhen somit den Zuckerverlust in der Melasse. Daher ist dieses Verfahren in den meisten Fällen unwirtschaftlich.

Die technische Verwirklichung der Vorschlages, den in der Zuckerindustrie anfallenden Carbonatationsschlamm mit den extrahierten Zuckerrübenschnitzeln zu vermischen und auf diese Weise die Abpreßbarkeit der Schnitzel zu erhöhen (F. Teschner, DIE NAHRUNG *20*, 817-821 (1976), scheiterte bisher an der zu niedrigen Löslichkeit des Calciumcarbonates in diesem System und an der Unmöglichkeit, die dazu benötigten Verweilzeiten wirtschaftlich zu realisieren.

In der Praxis gebräuchlich ist ferner das Vermischen von Preßschnitzeln mit Melasse, welche in der Regel mit einem Trockensubstanzgehalt von über 80 % zur Anmischung kommt. Diese melassierten Preßschnitzel werden direkt der thermischen Trocknung zugeführt.

Darüber hinaus ist es bekannt, eine solche Schnitzel-Melasse-Maische einer weiteren mechanischen Abpressung zu unterwerfen und ggf. anschließend zu trocknen, da sich die Melasse mit hohem Trockensubstanzgehalt mit dem Restwasser in den Schnitzeln mit sehr niedrigem Trockensubstanzgehalt vermischt und damit ein Flüssigkeitsgemisch mit einem Trockensubstanzgehalt von ca. 10 % entsteht, das die osmotischen Verhältnisse zwischen wässriger Phase und hydratisierter Pflanzenfaser verändert und vor allem das wieder abpreßbare Flüssigkeitsvolumen erhöht. Der resultierende Trockensubstanzgehalt der Flüssig-Phase ist im wesentlichem vom zugegebenen Melasseanteil abhängig. Die Energieeinsparung ist dadurch zu erreichen, daß das in der zweiten Preßstufe abgepreßte Flüssigkeitsgemisch aus Melasse und Restwasser in den Schnitzeln in einer z. B. mehrstufigen Verdampferanlage mit geringerem Energieaufwand bzw. Abwärme eingedampft werden kann und sich damit die in der direkt beheizten Schnitzeltrocknung zu verdampfende Wassermenge verringert.

Aus der FR-A-2 380 740 ist ein Verfahren der eingangs genannten Art bekanntgeworden. Von der Zugabe anderer Additive, wie Aluminiumsulfate oder Calciumchlorid anstelle von Melasse oder anderen zuckerhaltigen Stoffen in der Verfahrensstufe b) wird jedoch abgeraten, da sie zu einer geringeren Erhöhung des Trockensubstanzgehalts in der zweiten mechanischen Abpressung (Verfahrensstufe c)) führen. Außerdem ergibt die Preßflüssigkeit nach Verfahrensstufe c) bei der nach dieser französischen Veröffentlichung vorgesehenen Rückführung in die Zuckergewinnung eine geringere Zuckerausbeute und führt zu Korrosionserscheinungen.

Demgegenüber liegt der Erfindung die Aufgabe zugrunde, die mechanische Abpreßbarkeit von in der Zuckerindustrie anfallenden extrahierten Rübenschnitzeln durch chemische Einwirkung auf die Zellge-

2

0 014 908

rüstsubstanzen zu verbessern und damit den Energieverbrauch bei der anschließenden thermischen Trocknung zu verringern, ohne die Wirtschaftlichkeit und Qualität der Zuckerextraktion und Zuckerisolierung zu beeinträchtigen.

Zur Lösung dieser Aufgabe wird erfindungsgemäß bei einem Verfahren der eingangs genannten Art vorgeschlagen, daß in der Verfahrensstufe b) entweder zusätzlich oder alternativ Säure, z. B. Salzsäure, zugegeben wird, daß die in der Verfahrensstufe c) gewonnene Preßflüssigkeit in die Verfahrensstufe b) zurückgeführt und/oder in eingedampfter Form vor oder nach der Verfahrensstufe d) den Schnitzeln wieder zugeführt wird und daß das Versetzen mit den Salzen mehrwertiger Kationen mit der rückgeführten Preßflüssigkeit erfolgt.

Die in dem vorstehend diskutierten Stand der Technik geäußerten Bedenken werden durch den Erfindungsvorschlag überwunden, daß die nach der zweiten Abpressung (Verfahrensstufe c)) erhaltene Preßflüssigkeit nicht in die Zuckergewinnung zurückgeführt wird, sondern zur Zugabe der Kationen in der Verfahrensstufe b) verwendet und/oder in eingedampfter Form vor oder nach der Verfahrensstufe d) den Schnitzeln wieder zugegeben wird. Es wurde gefunden, daß dabei der Energiebedarf für den thermischen Trocknungsprozeß um ca. 40 % verringert wird, wenn die nach dem ersten mechanischen Abpressen anfallenden Preßschnitzel mit Salzen mehrwertiger Kationen, z. B. $CaCl_2 \cdot 6H_2O$, $FeCl_3 \cdot 6H_2O$, so behandelt werden, daß die im Pektingerüst der Preßschnitzel noch mit einwertigen Kationen (Kalium, Natrium) besetzten Carboxylgruppen gegen mehrwertige Kationen ausgetauscht werden. Dadurch wird die Abpreßbarkeit der Preßschnitzel in einer sich anschließenden zweiten mechanischen Abpressung erheblich verbessert. Durch die Zugabe der Salzlösung nach der ersten Abpreßstufe wird nach der zweiten mechanischen Abpressung in den erhaltenen Presslingen ein Trockensubstanzgehalt > 35 % erreicht. Das in der zweiten Abpressung anfallende Preßwasser, das unter anderem noch nicht ausgetauschte höherwertige Kationen enthält, kann teilweise wieder zum Verdünnen der Salzlösungen und zum Einmaischen der unbehandelten Preßschnitzel benutzt werden, wobei nur der in den behandelten, nachgepreßten Preßschnitzeln verbleibende Anteil der Kationen ersetzt werden muß. Durch Anwendung saurer Salze bzw. Zugabe von Säuren, wie z. B. Salzsäure, kann ebenfalls der pH-Wert in den Schnitzeln erniedrigt werden, wodurch die Abpreßbarkeit der Preßlinge wiederum verbessert wird. Eine solche Absenkung des pH-Wertes ist ebenfalls während des Extraktionsprozesses unwirtschaftlich, da die benötigten Säuremengen wesentlich höher wären und der zugesetzte Überschuß — wie bei der Zugabe von Salzen beschrieben — über den Rohsaft in die Melasse gelangt und die Zuckerausbeute verringert. Eine pH-Absenkung in der Extraktion führt außerdem zu unerwünschten technologischen Nebenwirkungen, wie Inversion der Saccharose.

Wenn der niedrigere pH-Wert in den nachabgepreßten Schnitzeln nicht gewünscht wird, kann eine Rückalkalisierung durch Zugabe von Alkali- oder Erdalkaliionen, z. B. Natriumhydroxid oder Calciumoxid bzw. Calciumhydroxid, erfolgen.

Der Überschuß der teilweise nach Salz- und/oder Säurezugabe zum Anmischen mit den Preßschnitzeln zurückgenommenen Preßflüssigkeit wird in einer ein- oder mehrstufigen Verdampferanlage auf ca. 90 % Trockensubstanzgehalt eingedickt und den Schnitzeln nach der zweiten Abpressung oder der Trocknung zugesetzt. Es kann auch eine Teilmenge der im Verdampfer konzentrierten Preßflüssigkeit zum Anmischen zurückgenommen werden, da sich mit steigendem Trockensubstanzgehalt dieser angemischten Flüssigkeit auch der Trockensubstanzgehalt der abgepreßten Schnitzel erhöht. Andererseits muß eine ausreichende Benetzung der Schnitzel stattfinden, die von der angemischten Wassermenge und der nach der ersten Abpressung in den Schnitzeln verbliebenen Wassermenge abhängt. Bei Anwendung des erfindungsgemäßen Verfahrens wird sich der optimale, d. h. wirtschaftlichste Endpunkt der z. Z. auf maximalen Trockensubstanzgehalt orientierten (ersten) Abpressung der extrahierten Schnitzel zu niedrigeren Trockensubstanzgehalten verschieben, da damit die Durchsatzleistung der ersten Abpressung steigt, ohne die thermische Trocknung zu belasten. Die Höhe der Abpressung richtet sich dann nach der Ausbeutebilanz der (Zucker)-Extraktion.

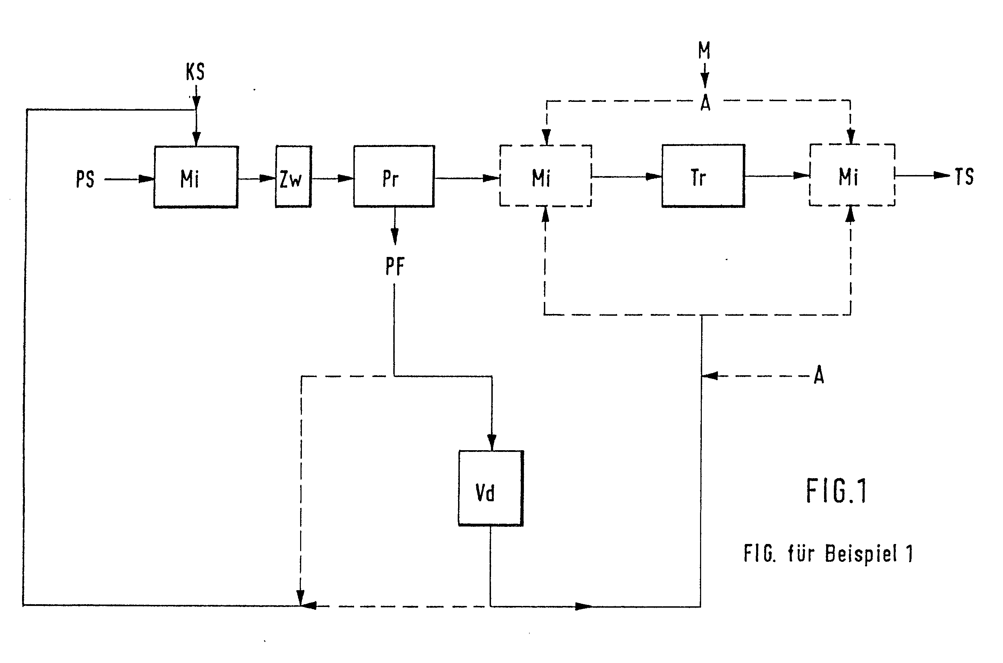

Eine Zugabe von Hydroxiden zur pH-Wert-Einstellung oder auch anderer Komponenten, die den Futterwert der getrockneten Schnitzel erhöhen, kann nach der zweiten Abpressung zusammen mit Melasse erfolgen, die üblicherweise den extrahierten Schnitzeln als Futtermittelkomponente zugesetzt wird. Die verfahrenstechnische Durchführung sollen die beiden nachfolgenden Beispiele anhand des Verfahrensschemas auf der beiliegenden Figur erläutern.

Die beim nachfolgenden Beispiel 1 verwendeten Abkürzungen und Zeichen bedeuten :

PS = Preßschnitzel
NP = nachabgepreßte Schnitzel
TS = Trockenschnitzel
PF = abgepreßte Flüssigkeit
M  = Melasse
K  = mehrwertige Kationen bzw. ihre Salze
S  = Säuren
KS = K und/oder S
A  = Alkali- oder Erdalkalihydroxide
Pr = Schnitzelpresse (mechanische Entwässerung)

3

Mi = Mischeinrichtung
Zw = Zwischenlagerung
Vd = Verdampferanlage
Tr = Trocknung (thermische Entwässerung)
——————— = definierter Weg
— — — — — — = alternativer Weg

## Beispiel 1

Die nach einer ersten an sich bekannten mechanischen Abpressung erhaltenen Preßschnitzel (PS) mit ca. 80 % Wassergehalt werden gemäß Figur in einer Mischstrecke (Mi) bekannter Bauart (z. B. Drais, Mannheim ; Schugi, Amsterdam) mit einer wäßrigen Lösung von Salzen mehrwertiger Kationen gemischt, wobei die Lösung von Salzen in der im Kreislauf zurückgenommenen Preßflüssigkeit (PF) der nachgeschalteten zweiten Abpressung erfolgt. Es werden 0,5 bis 10 %, vorzugsweise 1,5 bis 4 %, dieser Salze (S) wasserfrei berechnet, z. B. $CaCl_2 \cdot 6H_2O$, $AlCl_3 \cdot 6H_2O$ oder $FeCl_3 \cdot 6H_2O$, berechnet auf Schnitzeltrockensubstanz, zugegeben. Gleichzeitig kann auf gleichem Wege eine Säurezugabe (S), z. B. Salzsäure, erfolgen, in der von der Pufferkapazität der Schnitzel abhängenden Menge, daß ein pH-Wert von 2,5 bis 5, vorzugsweise von 3,5 bis 4,5, in den Schnitzeln erreicht wird. Diese Säurezugabe kann auch alleine ohne Zugabe der Salze erfolgen. Nach dem Mischer ist ein Zwischenbunker vorhanden, der Durchsatzmengenschwankungen zwischen der ersten (nicht dargestellten) und zweiten Pressenstation (Pr) aufnimmt. Diese Zwischenlagerung muß so ausgelegt sein, daß eine Mindestverweilzeit von 10 Minuten als Kontaktzeit zwischen Schnitzeln und Flüssigkeit gewährleistet ist.

Die Schnitzel erreichen dann nach der zweiten Abpressung in Abhängigkeit von dem applizierten Zusatz Wassergehalte von 70 % (nur Säurezugabe), 65 % (nur Salzzugabe) und 60 % (Salz- und Säurezugabe). Diese beschriebene Abpreßleistung ist von den Betriebsbedingungen der Schnitzelpresse abhängig ; sie kann z. B. von der Presse RS 64 der Firma Stord, Bergen/Norwegen, bei einer Spindeldrehzahl im Bereich von 1,6 UpM erreicht werden, wobei sich eine Durchsatzleistung von 1,8 t/h Schnitzeltrockensubstanz einstellt ; das entspricht einer Rübenverarbeitung von rd. 720 t/d.

Die Preßflüssigkeit (PF) der zweiten Abpressung wird, wie die Figur zeigt, in einem Teilstrom auf ca. 90 % Trockensubstanzgehalt eingedickt. Der Kreislaufüberschuß aus der zur Eindickung verwendeten Verdampfungsanlage (Vd) wird den Schnitzeln hinter der zweiten Abpressung in einer Mischeinrichtung (Mi) zugesetzt, und zwar vor oder nach der Trocknungsanlage (Tr). Der Anteil der in den Kreislauf zurückgeführten eingedickten Preßflüssigkeit liegt zwischen 20 und 80 %, vorzugsweise 40 bis 70 %, der zirkulierten Menge, berechnet auf Trockensubstanzgehalt der Flüssigkeit, und hängt wie beschrieben von der wirtschaftlich optimalen Höhe der ersten Abpressung ab. Die Anmischung des Kreislaufüberschusses und die Zugabe von Alkalisierungszusätzen zur pH-Wert-Einstellung kann gemeinsam mit einer allgemein üblichen Melassezugabe erfolgen.

## Beispiel 2

Dieses Beispiel zeigt in Vergleichsversuchen anhand der Tabelle I die unterschiedliche Abpreßbarkeit von Schnitzeln mit und ohne Zusätzen, sowie die Abpreßleistung bei der Abpressung von Naßschnitzeln direkt aus der Extraktionsanlage.

Verwendet wurde eine Doppelspindelpresse der Fa. Stord/Bergen mit 12 cm Spindeldurchmesser und 650 mm Preßlänge bei 2,2 UpM der Doppelspindel. Es wurde mit je 100 kg Ausgangsmaterial (Naßbzw. Preßschnitzel) gearbeitet, so daß sich Versuchszeiten von 1 Stunde je Versuch ergaben.

Bei den Versuchen 1 und 2 wurden Naßschnitzel abgepreßt gemäß der derzeitigen Standardabpressung in Zuckerfabriken.

Die Versuche 3-12 zeigen die Verbesserung der Abpreßbarkeit durch die erfindungsgemäße Behandlung mit den in der Tabelle angegebenen Mengen an Salzen höherwertiger Kationen und Beeinflussung des pH-Wertes durch Säurezugabe. Im Versuch 3 werden völlig unbehandelte Preßschnitzel aus der Fabrikation mit 19,5 % TS-Gehalt abgepreßt. Als Null-Versuch wurde den Preßschnitzeln bei den Versuchen 4 und 5 die Flüssigkeitsmenge zugegeben, die zum Lösen der Salze und Säure während der nachfolgenden Versuche 6-12 benötigt wurde. Während sich bei den Versuchen 1-5 keine wesentlichen Unterschiede, insbesondere hinsichtlich des erreichten TS-Gehaltes in den abgepressten Schnitzeln, zeigen, wird durch Zugabe der Salze und Säure eine wesentliche Erhöhung des TS-Gehaltes in Abhängigkeit der verwendeten Kationen, der Zugabemenge und des pH-Wertes erreicht.

Tabelle I : Vergleichsversuche zur Abpressung und Nachabpressung von Rübenschnitzeln

| Produkt | Ver-such Nr. | % TS-Gehalt vor Schnitzelpresse | % TS-Gehalt nach Schnitzelpresse | Leistung der Schnitzelpresse kg/h Trockenmasse | Zugabe v. Kationen Material (Wasser-brei) | Zugabe v. Kationen Menge in % auf Schnitzel-TS | pH | Preßwasser % TS | Preßwasser % Zuck. | Bemerkung |
|---|---|---|---|---|---|---|---|---|---|---|
| Normale Ab-pressung : Naßschnitzel | 1 | 11,5 | 27,2 | 13,6 | — | — | 5,6 | 1,2 | 1,0 | Naßschnitzel direkt aus der Extraktion |
| | 2 | 12,2 | 26,1 | 12,7 | — | — | 5,4 | 1,0 | 0,9 | |
| Nachabpressung : Preßschnitzel | 3 | 19,5 | 28,6 | 15,7 | — | — | 5,8 | 2,6 | 1,2 | ohne Zugabe |
| Preßschnitzel | 4 | 16,7 | 27,2 | 12,9 | — | — | 5,9 | 0,9 | 0,7 } nur Wasser-zugabe |
| Preßschnitzel | 5 | 16,8 | 27,2 | 13,5 | — | — | 6,0 | 1,2 | 0,7 } |
| Preßschnitzel | 6 | 16,8 | 31,7 | 14,2 | $CaCl_2$ | 1,0 | 5,4 | 1,1 | 0,6 | |
| Preßschnitzel | 7 | 15,4 | 31,3 | 17,5 | $CaCl_2$ | 2,5 | 5,6 | 1,6 | 0,7 | pH-Wert-einstellung |
| Preßschnitzel | 8 | 17,0 | 32,1 | 14,5 | $CaCl_2$ | 1,0 | 5,2 | 1,1 | 0,6 | |
| Preßschnitzel | 9 | 17,3 | 34,6 | 14,8 | $AlCl_3$ | 1,0 | 4,9 | 1,0 | 0,6 | pH-Wert-einstellung |
| Preßschnitzel | 10 | 16,8 | 37,5 | 13,8 | $AlCl_3$ | 2,5 | 4,3 | 1,2 | 0,7 | |
| Preßschnitzel | 11 | 17,1 | 34,2 | 15,2 | $AlCl_3$ | 1,0 | 5,5 | 1,3 | 0,7 | pH-Wert-einstellung |
| Preßschnitzel | 12 | 16,5 | 40,3 | 14,9 | $AlCl_3$ | 2,5 | 4,0 | 1,4 | 0,6 | |

## Ansprüche

1. Verfahren zur Herstellung von Rübenschnitzeln hohen Trockensubstanzgehalts, bei dem die bei der Zuckerherstellung anfallenden extrahierten Schnitzel
    a) ein erstes Mal mechanisch abgepreßt,
    b) mit den Salzen mehrwertiger Kationen, z. B. Kalziumchlorid, Aluminiumsulfat, Eisenchlorid, in wässeriger Lösung versetzt,
    c) ein zweites Mal mechanisch abgepreßt und
    d) thermisch getrocknet werden,
dadurch gekennzeichnet, daß in der Verfahrensstufe b) entweder zusätzlich oder alternativ Säure, z. B. Salzsäure, zugegeben wird, daß die in der Verfahrensstufe c) gewonnene Preßflüssigkeit in die Verfahrensstufe b) zurückgeführt und/oder in eingedampfter Form vor oder nach der Verfahrensstufe d) den Schnitzeln wieder zugeführt wird und daß das Versetzen mit den Salzen mehrwertiger Kationen mit der rückgeführten Preßflüssigkeit erfolgt.

2. Verfahren nach Anspruch 1, dadurch gekennzeichnet, daß die Zugabe von mehrwertigen Salzen in einer Menge von 0,5 bis 10 % auf Schnitzeltrockensubstanz, vorzugsweise 1,5 bis 4 %, berechnet auf Schnitzeltrockensubstanz, erfolgt.

3. Verfahren nach Anspruch 1, dadurch gekennzeichnet, daß die Preßflüssigkeit der zweiten Abpressung (Verfahrensstufe c)) in einer ein- oder mehrstufigen Verdampferanlage eingedampft und zum Lösen der Salze verwertet wird.

4. Verfahren nach Anspruch 1, dadurch gekennzeichnet, daß der pH-Wert der Preßschnitzel auf 2,5 bis 5, vorzugsweise auf 3,5 bis 4,5, abgesenkt wird.

5. Verfahren nach den Ansprüchen 1 und 4, dadurch gekennzeichnet, daß vor oder nach der Trocknung der pH-Wert der Schnitzel durch Zugabe von Hydroxiden, z. B. als $Ca(OH)_2$, wieder angehoben und auf einen gewünschten Wert, vorzugsweise 6 bis 8, eingestellt wird.

6. Verfahren nach Anspruch 5, dadurch gekennzeichnet, daß die Zugabe der Kationen zur Anhebung des pH-Wertes vor oder nach der Trocknung mit der Anmischung von eingedampfter Preßflüssigkeit kombiniert wird.


## Claims

1. Process for the production of sugar-beet cossettes having a high dry-matter content, wherein the extracted cossettes collected in the making of sugar are
    a) a first time mechanically pressed,
    b) mixed with the salts of polyvalent cations, e. g. calcium chloride, aluminium sulphate, ferric chloride, in an aqueous solution,
    c) a second time mechanically pressed and
    d) thermally dried,
characterized in that the process step b) acid, e. g. hydrochloric acid, is added either additionally of alternatively, that the liquid obtained in the process step c) by pressing is recycled in the process step b) and/or in concentrated form is returned to the cossettes prior to or after the process step d), and that mixing with the salts of polyvalent cations is carried out with the recycled press liquid.

2. A process according to claim 1, characterized in that polyvalent salts are added in an amount of from 0.5 to 10 % relative to cossette dry-matter, preferably from 1.5 to 4 % relative to cossette dry-matter.

3. A process according to claim 1, characterized in that the press liquid of the second pressing (process step c)) is concentrated in a single- or multi-stage evaporating facility and is utilized for dissolving the salts.

4. A process according to claim 1, characterized in that the pH value of the pressed cossettes is lowered to 2.5 to 5, preferably to 3.5 to 4.5.

5. A process according to claims 1 and 4, characterized in that before or after drying the pH value of the cossettes is raised by the addition of hydroxides, e. g. in the form of $Ca(OH)_2$, and is adjusted to a desired value, preferably to 6 to 8.

6. A process according to claim 5, characterized in that the addition of the cations for raising the pH value before or after drying is combined with admixing concentrated press liquid.


## Revendications

1. Procédé de fabrication de cossettes de betteraves ayant une teneur élevée en matières sèches, dans lequel les cossettes épuisées provenant de la fabrication du sucre sont
    a) pressées mécaniquement une première fois,
    b) mélangées, dans une solution aqueuse, avec des sels de cations polyvalents, par exemple chlorure de calcium, sulfate d'aluminium, chlorure ferrique,
    c) pressées mécaniquement une seconde fois, et

d) séchées thermiquement,

caractérisé en ce que, dans l'étage de procédé b), on ajoute, soit en supplément soit en alternative, de l'acide, par exemple de l'acide chlorhydrique ; que le liquide de presse obtenu dans l'étage de procédé c) est recyclé dans l'étage de procédé b) et/ou recyclé, sous forme épaissie par évaporation, dans les cossettes, avant ou après l'étage de procédé d) et que le mélange avec les sels de cations polyvalents se fait avec le liquide de pressage recyclé.

2. Procédé suivant la revendication 1, caractérisé en ce que l'addition de sels polyvalents a lieu avec une quantité de 0,5 à 10 %, et de préférence de 1,5 à 4 %, calculée par rapport aux matières sèches des cossettes.

3. Procédé suivant la revendication 1, caractérisé en ce que le liquide du deuxième pressage (étage de procédé c)) est évaporé dans un appareil d'évaporation à un ou plusieurs étages et utilisé pour la dissolution des sels.

4. Procédé suivant la revendication 1, caractérisé en ce que le pH des cossettes épuisées s'abaisse entre 2,5 et 5, de préférence entre 3,5 et 4,5.

5. Procédé suivant les revendications 1 et 4, caractérisé en ce qu'avant ou après le séchage, le pH des cossettes est de nouveau élevé par addition d'hydroxides, par exemple sous forme de $Ca(OH)_2$, et réglé à une valeur voulue, de préférence 6 à 8.

6. Procédé suivant la revendication 5, caractérisé en ce que l'addition de cations pour relever le pH est combinée, avant ou après le séchage, avec le mélange du liquide de presse épaissi par évaporation.

FIG.1

FIG. für Beispiel 1

0 014 908